(19) Europäisches Patentamt
European Patent Office
Office européen des brevets

(11) **EP 2 856 452 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(21) Anmeldenummer: **13725599.8**

(22) Anmeldetag: **17.05.2013**

(51) Int Cl.:
*G08G 1/056* (2006.01)   *G08G 1/0962* (2006.01)
*B60W 40/06* (2012.01)   *B60W 40/10* (2012.01)
*G06K 9/00* (2006.01)   *B60W 40/02* (2006.01)
*B60W 40/072* (2012.01)

(86) Internationale Anmeldenummer:
**PCT/EP2013/060215**

(87) Internationale Veröffentlichungsnummer:
**WO 2013/174732 (28.11.2013 Gazette 2013/48)**

(54) **ERKENNUNG VON RICHTUNGSFAHRBAHNEN**

CARRIAGEWAY RECOGNITION

RECONNAISSANCE DE VOIES DE CIRCULATION DIRECTIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2012 DE 102012208740**

(43) Veröffentlichungstag der Anmeldung:
**08.04.2015 Patentblatt 2015/15**

(73) Patentinhaber: **Bayerische Motoren Werke Aktiengesellschaft**
**80809 München (DE)**

(72) Erfinder:
• **BUCHNER, Martin**
**81373 München (DE)**
• **HÖRWICK, Markus**
**81379 München (DE)**
• **SCHWARZ, Loren**
**81669 München (DE)**

(56) Entgegenhaltungen:
**EP-A1- 2 164 057      DE-A1-102007 048 842**
**DE-A1-102008 017 972**

• **COLLADO J M ET AL: "Detection and classification of road lanes with a frequency analysis", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6. Juni 2005 (2005-06-06), Seiten 78-83, XP010833947, DOI: 10.1109/IVS.2005.1505081 ISBN: 978-0-7803-8961-8**
• **KASPRZAK W ET AL: "Adaptive road recognition and ego-state tracking in the presence of obstacles", INTERNATIONAL JOURNAL OF COMPUTER VISION, KLUWER ACADEMIC PUBLISHERS, NORWELL, US, Bd. 28, Nr. 1, 1. Januar 1998 (1998-01-01) , Seiten 5-26, XP002507347, ISSN: 0920-5691, DOI: 10.1023/A:1008025713790**

**Beschreibung**

Die vorliegende Erfindung betrifft das Gebiet der Fahrerassistenzsysteme und genauer ein Verfahren zum Bereitstellen einer Einschätzung, ob eine Fahrbahn richtungsgebunden ist, und eine zu diesem Zweck eingerichtete Vorrichtung.

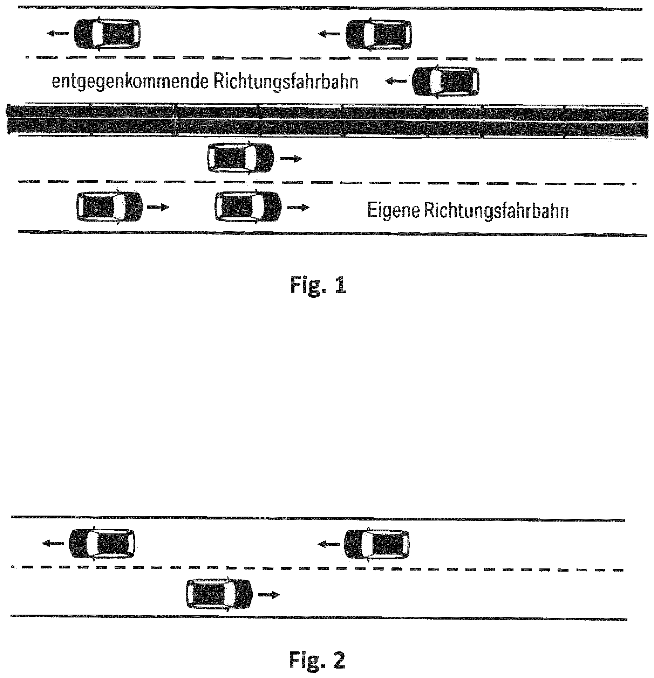

Als Richtungsfahrbahn oder richtungsgebundene Fahrbahn wird hier eine von anderen Fahrbahnen abgetrennte Fahrbahn bezeichnet, innerhalb derer sich die Fahrzeuge in die gleiche Fahrtrichtung bewegen. Eine Fahrbahn kann mehrere Fahrspuren umfassen. Die Abtrennung zeigt an, dass der auch nur temporäre Wechsel von Fahrzeugen in die andere Fahrbahn nicht vorgesehen ist und kann durch bauliche Trennungen, wie Leitplanken, Grünstreifen, Wände, etc. erfolgen. Figur 1 zeigt als Beispiel einer Richtungsfahrbahn eine Autobahn, die zwei durch eine Leitplanke baulich getrennte Fahrbahnen umfasst. In jeder Fahrbahn bewegen sich die Fahrzeuge auf mehreren Fahrspuren in dieselbe Fahrtrichtung. Figur 2 zeigt eine normale Bundesstraße mit zwei Fahrbahnen, denen je eine Fahrtrichtung zugewiesen ist. Durch die Art der Mittellinie wird angezeigt, dass beispielsweise Überholvorgänge auf der Gegenfahrbahn zugelassen sind. Figur 2 zeigt damit zwei Fahrbahnen, die nicht richtungsgebunden sind.

Die Erkennung, dass sich das Fahrzeug auf einer Richtungsfahrbahn befindet, kann von verschiedenen Fahrerassistenzsystemen (sog. Abnehmerfunktionen bzw. Abnehmer) verwendet werden, um deren Funktion zu verbessern oder überhaupt erst zu ermöglichen. Beispielsweise kann ein Ausweichassistent je nachdem ob sich das Fahrzeug auf einer Richtungsfahrbahn befindet oder nicht und damit dem zu erwartendem Gegenverkehr auf Fahrspuren, entscheiden, in welche Richtung ein Ausweichmanöver ausgeführt werden soll. Weiterhin kann die Aktivierung eines Stauassistenten oder einer automatischen Geschwindigkeitsregelung davon abhängig gemacht werden, ob sich das Fahrzeug auf einer Richtungsfahrbahn befindet.

Allgemein sind Navigationssysteme bekannt, die auf digitale Karten zugreifen, die häufig auch den Typ der hinterlegten Straßen, also beispielsweise die Typen Landstraße oder Autobahn, angeben. Auf dieser Grundlage und mithilfe einer Lokalisierung beispielsweise über GPS sind Navigationssysteme generell in der Lage, eine Aussage darüber bereitzustellen, ob sich das Fahrzeug auf einer Autobahn und folglich auf einer richtungsgebundenen Fahrbahn befindet.

Allerdings kann die Lokalisierung innerhalb einer Karte wie oben beschrieben zu einer fehlerhaften Bestimmung führen, ob sich das Fahrzeug auf einer Richtungsfahrbahn befindet oder nicht. So ist es möglich, dass die Daten der Karte veraltet oder ungenau sind, oder sich eine temporäre Veränderung ergeben hat. Darüber hinaus ist es möglich, dass Informationen zum Straßentyp fehlen oder die Lokalisierung des Fahrzeugs ungenau ist.

In der Druckschrift DE 10042980 A1 wird ein System offenbart, das Verkehrszeichen und Informationstafeln erkennt. Bei Streckenabschnitten mit mehreren Fahrstreifen wird die den jeweiligen Fahrstreifen zugeordnete Höchstgeschwindigkeiten erfasst und erkannt auf welchem Fahrstreifen sich das Kraftfahrzeug befindet.

In der Druckschrift DE 10 2005 007 802 A1 wird ein Verfahren zur Objektplausibilisierung in Fahrerassistenzsystemen offenbart. In diesem Verfahren wird versucht die Wahrscheinlichkeiten abzuschätzen, dass sich das eigene Fahrzeug auf der äußersten rechten bzw. auf der äußersten linken Fahrspur befindet. Dazu werden die Abstände von Objekten am Fahrbahnrand zur Mitte des eigenen Fahrzeugs bestimmt und mit einer Annahme für die Breite einer Fahrspur verglichen. Auf dieser Basis und unter Berücksichtigung der statistischen Streuungen bei der Bestimmung der Abstände werden die Wahrscheinlichkeiten bestimmt, dass sich der Fahrbahnrand unmittelbar rechts bzw. links neben dem eigenen Fahrzeug befindet. Diese Wahrscheinlichkeiten werden einer Tiefpassfilterung unterzogen.

Die Druckschrift DE 102007048842 A1 betrifft eine Steuervorrichtung für ein Fahrerassistenzsystem für ein Fahrzeug mit einem Eingang zum Empfangen von von einer Kamera erfassten Bildinformationen, wobei die Bildinformationen bestimmte Objekte aus der Umgebung des Fahrzeugs betreffen, deren Vorderansicht sich von ihrer Rückansicht unterscheidet. Ferner ist ein Auswertungsbestandteil vorhanden zur Auswertung der Bildinformationen zum Erkennen einer Vorder- und Rückansicht der bestimmten Objekte und ein Entscheidungsbestandteil zum Entscheiden über die Erstellung eines Ausgabesignals unter Verwendung von von dem Auswertebestandteil ermittelten Informationen, wobei das Ausgabesignal die Korrektheit der aktuellen Fahrtrichtung des Fahrzeugs betrifft, sowie ein Ausgang zum Ausgeben des Ausgabesignals. Weiterhin betrifft die Erfindung ein Verfahren zum Betreiben eines Fahrerassistenzsystems für ein Fahrzeug und ein Computerprogrammprodukt.

Aufgabe der Erfindung ist es, eine zuverlässige Erkennung von Richtungsfahrbahnen und eine zu diesem Zweck eingerichtete Vorrichtung bereit zu stellen.

Die Aufgabe wird durch ein Verfahren zum Bereitstellen einer Einschätzung, ob eine Fahrbahn richtungsgebunden ist, gemäß Anspruch 1 und einer zu diesem Zweck eingerichteten Vorrichtung gemäß Anspruch 17 gelöst.

Weitere vorteilhafte Ausführungsformen werden in den abhängigen Ansprüchen definiert.

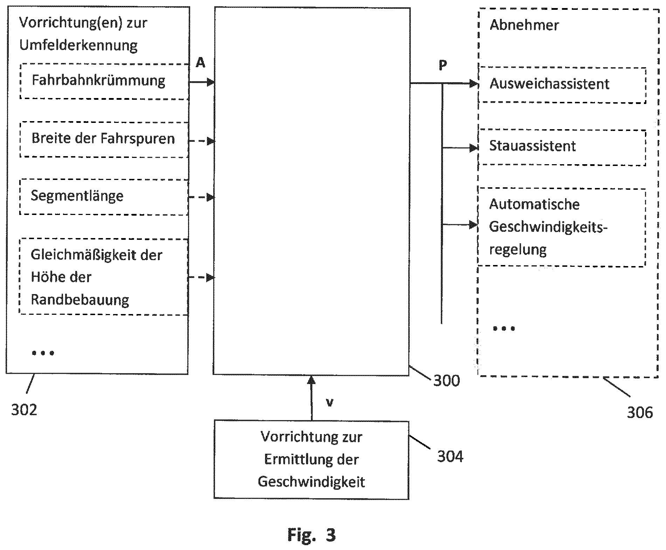

Figur 3 zeigt eine beispielhafte erfindungsgemäße Vorrichtung 300, die in einem Fahrzeug (nicht gezeigt) verbaut ist. Nur optionale Merkmale sind gestrichelt dargestellt. Die Vorrichtung 300 ist dazu eingerichtet, die Ausgabe A mindestens einer Vorrichtung zur Umfelderkennung 302 und die Geschwindigkeit v von einer Vorrichtung 304 zur Ermittlung der Geschwindigkeit des Fahrzeugs zu empfangen. Aus diesen Eingaben bestimmt die Vorrichtung 300 die Maßzahl P, die eine Einschätzung angibt, ob eine Fahrbahn richtungsgebunden ist. Die Maßzahl P wiederum kann von Abnehmern 306 verwendet werden.

Als Vorrichtungen zur Umfelderkennung kommen zunächst kamerabasierte Systeme gegebenenfalls mit Objekt- und Mustererkennung, ultraschallbasierte Systeme, Lidarsysteme, Radarsysteme oder ähnliche in Betracht. Das jeweils dafür geeignete System gibt auf an sich bekannte Weise Eigenschaften des Fahrzeugumfelds wie die Anzahl der gleichgerichteten Fahrspuren, die Breite der Fahrspuren, die Breite der Fahrspurmarkierungen, den Kreisradius einer Fahrspur oder den Kehrwert davon, also die Krümmung einer Fahrspur, die Geschwindigkeit von in die gleiche Richtung fahrenden Fahrzeugen, die Anzahl nebeneinander parallel fahrender Fahrzeuge, die Querbewegung von Fahrzeugen innerhalb einer baulichen Trennung, die Gleichmäßigkeit der Höhe oder Tiefe der Randbebauung, den Abstand des rechten Fahrbahnrandes zur Randbebauung, ein Maß für die Undurchsichtigkeit der Verkehrsführung, das Vorhandensein und die Höhe von Geschwindigkeitsbegrenzungen, die Vorgabe von Überholverboten, die Tatsache, dass sich das Fahrzeug in einer geschlossenen Ortschaft befindet, dass ein Kraftfahrstraßen Schild zu passieren ist bzw. passiert wurde, dass ein Autobahnschild zu passieren ist bzw. passiert wurde, dass Gegenverkehr auf der Fahrbahn vorhanden ist und/oder ein Maß für die Häufigkeit von parkenden Fahrzeugen am Straßenrand aus.

Darüber hinaus kommen Vorrichtungen zur Umfelderkennung in Betracht, die den Typ der Straße aus digitalen Landkarten herauslesen und die digitale Landkarten insoweit interpretieren, als dass sie die Länge des Segments mit demselben Straßentyp und/oder den Kreisradius der Fahrspur des Segments ausgeben, in dessen Bereich die zuvor bestimmte Position des Fahrzeugs fällt. Diese Vorrichtungen sind beispielsweise Navigationssysteme, die digitale Landkarten umfassen. Anstelle des Kreisradius einer Fahrspur kann auch der Kehrwert des Kreisradius, also die Krümmung eines Segments, ausgegeben werden.

Abnehmer der Maßzahl P können, wie oben bereits angesprochen, ein Ausweichassistent, ein Stauassistent und/oder eine automatische Geschwindigkeitsregelung sein.

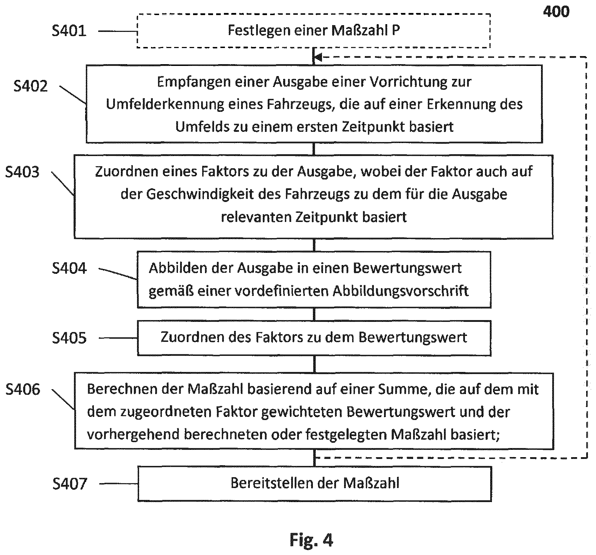

Figur 4 zeigt ein Flussdiagramm eines Verfahrens 400 gemäß der Erfindung. Nur optionale Merkmale werden gestrichelt dargestellt.

Je nachdem, ob vor der Ausführung des Verfahrens eine Maßzahl bereits berechnet wurde oder nicht, wird eine Maßzahl P festgelegt (S401). Diese Festlegung kann das Setzen der Maßzahl P auf Null oder einen anderen Startwert umfassen.

Von einer Vorrichtung zur Umfelderkennung eines Fahrzeugs wird eine Ausgabe A empfangen, die auf einer Erkennung des Umfelds zu einem ersten Zeitpunkt basiert (S402). Die Vorrichtung zur Umfelderkennung kann periodisch oder unregelmäßig die jeweils zu einem Zeitpunkt berechnete Ausgabe A ausgeben.

Dieser Ausgabe A wird ein Faktor F zugeordnet (S403), wobei der Faktor F auch auf der Geschwindigkeit v des Fahrzeugs an einem der Ausgabe A zugeordneten Zeitpunkt basiert. Die Geschwindigkeit v kann die vom Fahrzeug gefahrene oder innegehabte Geschwindigkeit zum zumindest ungefähren Zeitpunkt der Ausgabe, zum zumindest ungefähren Zeitpunkt der Berechnung der Ausgabe durch die Vorrichtung zur Umfelderkennung oder zum ungefähren Zeitpunkt der Messung von Eingangsgrößen durch die Vorrichtung zur Umfelderkennung sein.

Bevorzugt basiert der Faktor F auf der Multiplikation der Geschwindigkeit v mit einer Zeitspanne $\Delta t$. Der Faktor F basiert also auf der (bei veränderter Geschwindigkeit während der Zeitspanne $\Delta t$ nur ungefähren) Strecke, die das Fahrzeug in der Zeitspanne $\Delta t$ durchläuft, wie in folgendem Ausdruck (1) charakterisiert, in dem v(t) die Geschwindigkeit des Fahrzeugs zum Zeitpunkt t ist:

$$F = v(t) * \Delta t \qquad\qquad (1)$$

Um die Genauigkeit zu erhöhen kann auch ein Mittelwert der Geschwindigkeit v während der Zeitspanne $\Delta t$ verwendet werden. In einer Alternative kann als Faktor auch die Messung der durchlaufenen Strecke in der Zeitspanne $\Delta t$ als Basis für den Faktor F verwendet werden.

In einer vorteilhaften Weiterbildung entspricht die Zeitspanne $\Delta t$ der Zeit zwischen zwei Zeitpunkten, zu denen je eine Ausgabe A der Vorrichtung zur Umfelderkennung empfangen wird, zu denen je eine Ausgabe A von der Vorrichtung zur Umfelderkennung ausgegeben wird, zu denen je eine Erkennung des Umfelds stattgefunden hat oder zu denen je die Messungen der Vorrichtung zur Umfelderkennung durchgeführt wurden, die zur Berechnung der jeweiligen Ausgabe A geführt haben.

Weiterhin wird die Ausgabe A in einen Bewertungswert x gemäß einer vordefinierten Abbildungsvorschrift abgebildet (S404). Diese Abbildungsvorschrift ordnet einer Ausgabe A einen Bewertungswert x zu. Bei dieser Zuordnung wird berücksichtigt, inwiefern die durch die Ausgabe A repräsentierte Eigenschaft des Fahrzeugumfelds auf eine Richtungsfahrbahn hindeutet.

Der Bewertungswert x wird der Ausgabe A zugeordnet (S405).

Anschließend wird die Maßzahl P berechnet und zwar basierend auf einer Summe, die auf dem mit dem zugeordneten Faktor gewichteten Bewertungswert und der vorhergehend berechneten oder festgelegten Maßzahl basiert (S406).

Die Berechnung der Maßzahl P lässt sich somit wie in Ausdruck (2) dargelegt charakterisieren, wobei $P_{alt}$ die vorhergehend berechnete oder festgelegte Maßzahl repräsentiert:

$$P = F * x + P_{alt} \qquad\qquad (2)$$

Die berechnete Maßzahl P wird daraufhin bereitgestellt (S406).

Bevorzugt wird das Verfahren 400 zumindest einmal wiederholt, wobei bei der Wiederholung von der Vorrichtung zur Umfelderkennung eine Ausgabe A empfangen wird, die auf einer Erkennung des Umfelds zu einem anderen Zeitpunkt basiert.

Um auf zuverlässige Art eine Einschätzung zur Richtungsgebundenheit einer Fahrbahn abzugeben wird die Ausgabe der Vorrichtung zur Umfelderkennung mit einem Faktor gewichtet, der auf der Geschwindigkeit des Fahrzeugs beruht. Nur so kann sichergestellt werden, dass die zeitlich verschiedenen Ausgaben der Vorrichtung gemäß ihrer Bedeutung in die Einschätzung einfließen. Abhängig von der Geschwindigkeit des Fahrzeugs kommt den Ausgaben der Vorrichtung zur Umfelderkennung des Fahrzeugs nämlich eine unterschiedliche Bedeutung zu. Bei einem stillstehenden Fahrzeug beispielsweise wird die zu verschiedenen Zeitpunkten berechnete Ausgabe in den meisten Fällen dasselbe Umfeld abbilden wodurch die Ausgaben die Eigenschaften des Umfelds nicht bestätigen können. Dem wird erfindungsgemäß durch die Gewichtung mit dem auf der Geschwindigkeit basierenden Faktor entgegengewirkt.

Häufig lässt eine Eigenschaft einer Fahrzeugumgebung, wie beispielsweise das Überschreiten einer bestimmten Fahrspurbreite, bei nur kurzfristigem und/oder einmaligem Auftreten keine Einschätzung mit hinreichender Sicherheit zu, ob eine Richtungsfahrbahn vorliegt. Mithilfe des erfindungsgemäßen Verfahrens können solche Eigenschaften auf ein bestätigtes Auftreten oder Nicht-Auftreten überprüft werden, wodurch mit größerer Sicherheit über die Maßzahl P eine Einschätzung ermöglicht wird, ob eine Richtungsfahrbahn vorliegt oder nicht.

Die Bereitstellung des Berechnungsergebnisses der Maßzahl P hat den Vorteil, dass Abnehmer selbst entscheiden können, welche Sicherheit der Einschätzung, also welcher Wert von P, für sie ausreicht, um ihre Funktion zu aktivieren oder von einer Richtungsfahrbahn auszugehen. Für eine automatische Geschwindigkeitsregelung könnte ein kleinerer Wert von P ausreichen, als für einen Stauassistent.

In einer bevorzugten Weiterbildung umfasst das Verfahren weiter das Begrenzen der Maßzahl P auf einen Maximalwert. Das Erreichen des Maximalwerts der Maßzahl P repräsentiert die Einschätzung, dass eine Fahrbahn richtungsgebunden ist. Weiteres Summieren von positiven Werten zu diesem Maximalwert führt nicht zu einer Erhöhung der Maßzahl P. Umgekehrt kann das Verfahren weiter das Begrenzen der Maßzahl auf einen Minimalwert umfassen. Weiteres Summieren von negativen Werten zu diesem Minimalwert führt nicht zu einer Verringerung der Maßzahl. Dabei repräsentiert das Erreichen des Minimalwerts durch die Maßzahl P die Einschätzung, dass es sich nicht um eine Richtungsfahrbahn handelt. Vorteilhafterweise ist der Maximalwert 1 und der Minimalwert 0.

Zusätzlich kann das Verfahren die Ausgabe R bereitstellen, die anzeigt welchen von zwei Schwellwerten (bspw. Minimal- oder Maximalwert) die Maßzahl P als letztes erreicht hat (wenn bereits ein Schwellwert erreicht wurde). Diese Ausgabe R kann als Aussage verstanden werden, ob eine Richtungsfahrbahn erkannt wurde oder nicht, beispielsweise durch das Annehmen der Werte +1 oder -1. In diesem Fall kann die Bereitstellung der Maßzahl P selbst unterbleiben. Vorteilhafter Weise ist der erste Schwellwert der Maximalwert und der zweite Schwellwert der Minimalwert. Die Aussage R kann bedeuten, dass eine Richtungsfahrbahn erkannt wurde, oder dass erkannt wurde, dass keine Richtungsfahrbahn vorliegt.

Das Verfahren 400 kann auch dazu verwendet werden auf Landkarten basierende Aussagen bezüglich der Richtungsgebundenheit einer Fahrbahn zu plausibilisieren. In diesem Fall werden Ausgaben von Vorrichtungen zur Umfelderkennung auf der Grundlage von Landkarten anders behandelt als die Ausgaben von anderen Vorrichtungen zur Umfelderkennung. Dazu umfasst das Verfahren 400 ferner das Empfangen einer Ausgabe einer Vorrichtung zur Umfelderkennung, die auf der Grundlage einer Landkarte und der aktuellen Position eine Einschätzung abgibt, ob sich das Fahrzeug auf einer Richtungsfahrbahn befindet. Diese Ausgabe wird in eine weitere Maßzahl Q abgebildet, deren Werte auf einen Minimal- und Maximalwert (beispielsweise 0 und 1) begrenzt sein können. Alternativ kann auch direkt die Maßzahl Q empfangen werden. Für diese Maßzahl Q wird die Ausgabe S bereitgestellt, die angibt, welchen von zwei Schwellwerten (beispielsweise den Maximal- und Minimalwert) die Maßzahl Q als letztes erreicht hat (wenn ein Schwellwert bereits erreicht wurde) bzw. die unabhängig davon angibt, ob es sich um eine Richtungsfahrbahn handelt oder nicht. Die Ausgabe S kann als Aussage verstanden werden, ob auf der Grundlage der Landkarte und der aktuellen Position eine Richtungsfahrbahn erkannt wurde oder nicht und beispielsweise die Werte +1 und -1 annehmen.

Die Ausgaben R bzw. S können dazu verwendet werden, eine übergeordnete Aussage zur Richtungsfahrbahn RFB bereitzustellen. Dazu werden die Ausgaben R und S gemäß ihren Maßzahlen P und Q mit Faktoren G1 und G2 gewichtet und summiert, wie in dem Ausdruck (3) dargestellt:

$$RFB = G1 * R + G2 * S \qquad (3)$$

Die Faktoren G1 und G2 können die Bedeutung widerspiegeln, die der Qualität der jeweiligen Aussagen der zugrundeliegenden Maßzahlen beigemessen wird. In einer bevorzugten Weiterbildung basieren die Gewichte G1 bzw. G2 auf den Maßzahlen P bzw. Q. Die Berechnung der Maßzahlen kann wie in folgendem Ausdruck (4) dargestellt erfolgen:

$$G1 = \frac{W1}{W1+W2} ; G2 = \frac{W2}{W1+W2} \qquad (4)$$

Die Werte W1 und W2 lassen sich dabei wie folgt berechnen:

-    W1 ist gleich der Maßzahl P, falls die Ausgabe R anzeigt, dass zuletzt der Maximalwert erreicht wurde,
-    W1 ist gleich dem Maximalwert von P minus der Maßzahl P, falls die Ausgabe R anzeigt, dass zuletzt der Minimalwert erreicht wurde,
-    W2 ist gleich der Maßzahl Q, falls die Ausgabe S anzeigt, dass zuletzt der Maximalwert erreicht wurde,
-    W2 ist gleich dem Maximalwert von Q minus der Maßzahl Q, falls die Ausgabe S anzeigt, dass zuletzt der Minimalwert erreicht wurde.

Auf diese Weise kann die Information über den Straßentyp, die aus digitalen Landkarten bereitgestellt wird, mit den Ausgaben von zumindest einer weiteren Vorrichtung zur Umfelderkennung verknüpft werden und damit plausibilisiert werden.

In einer anderen bevorzugten Weiterbildung umfasst das Verfahren das Ausgeben einer Strecke, die vom Fahrzeug oder genauer der Vorrichtung zur Umfelderkennung, durchlaufen werden müsste bis die Maßzahl P vom aktuellen Wert aus den Maximal- oder den Minimalwert erreicht, wenn die Ausgabe der Vorrichtung zur Umfelderkennung die letzte Ausgabe gleichbleibend ausgeben würde. Auf diese Weise können Assistenzsysteme auf den erwarteten zukünftigen Zustand vorbereitet werden.

In einer Fortentwicklung des Verfahrens 400, bei dem der Faktor F auf der zurückgelegten Strecke basiert, repräsentiert der Kehrwert des Bewertungswerts x bevorzugt die Grenzstrecke, die ein Fahrzeug bei zur letzten Ausgabe gleichbleibenden Ausgaben durchlaufen müsste, um eine Änderung der Maßzahl P um einen vorbestimmten Betrag zu erreichen, vorzugsweise um die Differenz zwischen Maximal- und Minimalwert der Maßzahl P.

In manchen Weiterbildungen umfasst das Verfahren 400 weiter das Bereitstellen des mit dem Faktor F gewichteten Bewertungswertes x. Dieser gewichtete Bewertungswert x kann von Abnehmern verwendet werden, um zusätzliche Informationen über die Maßzahl P zu erhalten. Wenn ein Abnehmer seine Funktion nur aktiviert, wenn eine Fahrbahn mit sehr hoher Sicherheit richtungsgebunden ist, kann dieser z.B. berücksichtigen, ob die Maßzahl P einen bestimmten Wert erreicht oder überschritten hat (beispielsweise den Maximalwert) und ob der mit dem Faktor gewichtete Bewertungswert positiv ist. Allgemeiner ausgedrückt kann in manchen Weiterbildungen die Änderung der Maßzahl P bereitgestellt werden.

In einer vorteilhaften Weiterentwicklung der Erfindung wird die Maßzahl P auf einen Maximal- oder Minimalwert gesetzt, wenn eine Ausgabe von einer Vorrichtung zur Umfelderkennung empfangen wird, dass ein Autobahnschild zu passieren ist bzw. passiert wurde. Diese Maßzahl P kann dann für eine vorbestimmte Zeit oder Wegstrecke auf dem Wert gehalten werden.

Ähnlich kann die Maßzahl P auf einen Minimal- oder Maximalwert gesetzt werden, wenn eine Ausgabe von einer Vorrichtung zur Umfelderkennung empfangen wird, dass Gegenverkehr auf der Fahrbahn vorhanden ist, und gegebenenfalls für eine vorbestimmte Zeit oder Wegstrecke auf dem Wert gehalten werden.

Ferner kann das erfindungsgemäße Verfahren die Bestimmung umfassen, ob sich das Fahrzeug auf einer Autobahn befindet. Diese Bestimmung wird ausgeführt, falls die Maßzahl P einen vorbestimmten Schwellwert überschreitet, ab dem von einer Richtungsfahrbahn ausgegangen wird. Die Bestimmung, dass sich das Fahrzeug auf einer Autobahn befindet, ist ferner davon abhängig, dass zumindest eine der folgenden Bedingungen eingetreten ist: Empfangen der Ausgabe einer Vorrichtung zur Umfelderkennung, dass ein den Beginn einer Autobahn anzeigendes Schild erkannt wurde oder Empfangen der Ausgabe einer Vorrichtung zur Umfelderkennung, die anzeigt, dass gemäß einer Landkarte der Straßentyp des Segments, in dessen Bereich die Position des Fahrzeugs fällt, eine Autobahn ist. Die Feststellung, dass sich das Fahrzeug auf einer Autobahn befindet, kann eine Voraussetzung für die Aktivierung von bestimmten Assistenzfunktionen sein, beispielsweise einem Stauassistent.

In dem Fall, dass die Maßzahl P oder die Ausgabe R anzeigt, dass die Fahrbahn als nicht richtungsgebunden angesehen wird, kann das Verfahren zusätzlich die Information bereitstellen, ob und auf welcher Fahrspur der Fahrbahn mit Gegenverkehr zu rechnen ist. Gegebenenfalls kann die Information auch angeben, dass es unbekannt ist, ob auf der jeweiligen Fahrspur mit Gegenverkehr zu rechnen ist. Bei dieser Bereitstellung kann eine Ausgabe einer Vorrichtung zur Umfelderkennung berücksichtigt werden, die anzeigt, welche Spuren durch eine durchgezogene Linie getrennt sind. Ferner kann bei dieser Bereitstellung eine Ausgabe einer Vorrichtung zur Umfelderkennung berücksichtigt werden, die anzeigt, auf welcher Fahrspur Objekte erkannt wurden und deren erkannter Bewegung.

Erfindungsgemäß basiert die Berechnung der Maßzahl P auch auf den Ausgaben von zwei Vorrichtungen zur Umfelderkennung nach Anspruch 10. Auf diese Weise kann die Qualität der Erkennung weiter gesteigert werden.

Bevorzugt umfasst das Verfahren auch das zumindest einmalige Wiederholen der oben genannten Schritte des Verfahrens, wobei bei der Wiederholung von der ersten und zweiten Vorrichtung zur Umfelderkennung je eine zu einem anderen Zeitpunkt berechnete Ausgabe empfangen wird.

Der Vorteil der Verwendung einer zweiten Vorrichtung zur Umfelderkennung liegt darin, dass bei der Einschätzung, ob eine Richtungsfahrbahn vorliegt, eine weitere Eigenschaft des Umfeldes berücksichtigt wird. Die Einschätzung verbessert sich durch diese zusätzliche Information. Generell verbessert sich die Einschätzung mit weiter hinzugenommenen Ausgaben von Vorrichtungen zur Umfelderkennung. Eine Weiterbildung des besonders bevorzugten Ausführungsbeispiels verwendet deshalb mehr als zwei Vorrichtungen zur Umfelderkennung und kombiniert deren Ausgaben auf zu der oben dargestellten Art analoger Weise. Die Berechnung von P lässt sich somit gemäß dem folgenden Ausdruck (5) beschreiben:

$$P_j = \sum_{i=1}^{N} F_i\left(t_{i,j}\right) * x_i\left(t_{i,j}\right) + P_{alt} \qquad (5)$$

Wobei $P_j$ die Ausgabe in der j-ten Wiederholung des Verfahrens ist, N die Anzahl der Vorrichtungen zur Umfelderkennung bezeichnet, $F_i$ der Faktor für die i-te Vorrichtung ist, $t_{i,j}$ der für die Ausgabe der i-ten Vorrichtung und für die j-te Wiederholung relevante Zeitpunkt ist und $x_i$ den Bewertungswert für die Ausgabe der i-ten Vorrichtung bezeichnet.

Bei diesem weiteren Ausführungsbeispiel kann weiterhin die Änderung der Maßzahl P bereitgestellt werden. Weiterhin kann das Verfahren gemäß diesem weiteren Ausführungsbeispiel ebenfalls durch die oben präsentierten Weiterbildungen, Weiterentwicklungen, Fortbildungen oder Fortentwicklungen oder anderen fakultativen Merkmale des Verfahrens 400 weiter entwickelt werden; diese sind auch mit dem weiteren Ausführungsbeispiel vereinbar.

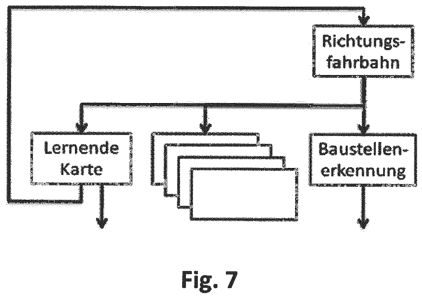

Die erfindungsgemäße Vorrichtung kann als Modul auch vorteilhaft mit anderen Modulen, wie einer lernenden Karte oder einer Baustellenerkennung verknüpft werden (vgl. Figur 7). Wenn das Fahrzeug erkennt, dass es auf einer RFB ist wird diese Information automatisch in das Modul lernende Karte eingespielt und die lernende Karte entsprechend angepasst. Durch den Austausch der aktualisierten Karte mit anderen Verkehrsteilnehmern oder einer zentralen Stelle können andere Verkehrsteilnehmer von der Aktualisierung profitieren. Auch das Modul der Baustellenerkennung kann die Information über die Richtungsfahrbahn verwenden.

Mittels der Verknüpfung der lernenden Karte mit dem Modul Richtungsfahrbahn können die Kriterien für die Charakterisierung der Richtungsfahrbahn bzw. die vordefinierten Abbildungsvorschriften angepasst werden. Dies umfasst insbesondere eine Verringerung der Bewertungswerte, so dass die Ausgabe einer Vorrichtung zur Umfelderkennung eine stärkere Verringerung oder geringere Vergrößerung der Maßzahl P nach sich zieht.

Figur 1 zeigt in einer Prinzipdarstellung eine Autobahn.

Figur 2 zeigt in einer Prinzipdarstellung eine normale Bundesstraße mit zwei Fahrbahnen, denen je eine Fahrtrichtung zugewiesen ist.

Figur 3 zeigt eine beispielhafte erfindungsgemäße Vorrichtung 300.

Figur 4 zeigt ein Flussdiagramm eines Verfahrens 400 gemäß der Erfindung.

Figur 5 zeigte eine beispielhafte Abbildungsvorschrift für Breiten einer Fahrspur.

Figur 6 zeigte eine beispielhafte Abbildungsvorschrift für verschiedene Kreisradien einer Fahrspur.

Figur 7 zeigt das Prinzip der Verknüpfung eines Modus "Richtungsfahrbahn" mit anderen Modulen.

DETAILLIERTE BESCHREIBUNG EINES AUSFÜHRUNGSBEISPIELS

Das im Folgenden detailliert beschriebene Ausführungsbeispiel basiert auf der in Figur 3 gezeigten Vorrichtung 300, die eine Ausgabe von zwei Vorrichtungen zur Umfelderkennung empfängt. Die erste Vorrichtung zur Umfelderkennung gibt den Kreisradius der Fahrspur (Index 1 im Folgenden), also den Kehrwert der Krümmung der Fahrspur, aus. Die zweite Vorrichtung zur Umfelderkennung gibt die Breite der Fahrspur aus (Index 2 im Folgenden). Typischerweise werden die Ausgaben der Vorrichtungen zur Umfelderkennung im Wesentlichen gleichzeitig und periodisch empfangen und die Zeitspanne zwischen den Empfängen ist $\Delta t$. Im Folgenden wird der Einfachheit halber davon ausgegangen, dass die Ausgaben der beiden Vorrichtungen zur Umfelderkennung gleichzeitig und periodisch empfangen werden.

Die von der Vorrichtung gemäß dem detaillierten Ausführungsbeispiel errechnete Maßzahl P ist auf Werte zwischen 0 und 1 bzw. 0% und 100% begrenzt. Wenn der Wert 0% erreicht wird, bedeutet dies, dass die Fahrbahn als keine Richtungsfahrbahn eingestuft wird, wenn der Wert 100% erreicht wird bedeutet dies eine Einstufung als Richtungsfahrbahn. Diese Information kann als weitere Ausgabe R bereitgestellt werden, und zwar durch die Werte +1 (Richtungsfahrbahn) und -1 (keine Richtungsfahrbahn). Die Ausgabe R bleibt dabei solange in ihrem Zustand, bis der jeweils andere Wert erreicht wird.

Den beiden Ausgaben der Vorrichtungen zur Umfelderkennung ordnet die Vorrichtung 300 die Strecke (entspricht dem Faktor F) zu, die das Fahrzeug bis zum Empfang der nächsten Ausgaben zurückgelegt hat. Um die Strecke zu bestimmen berechnet die Vorrichtung 300 das Produkt aus der Geschwindigkeit zum Zeitpunkt t des Empfangs der Ausgabe und der Zeitspanne $\Delta t$.

$$F = v(t) * \Delta t$$

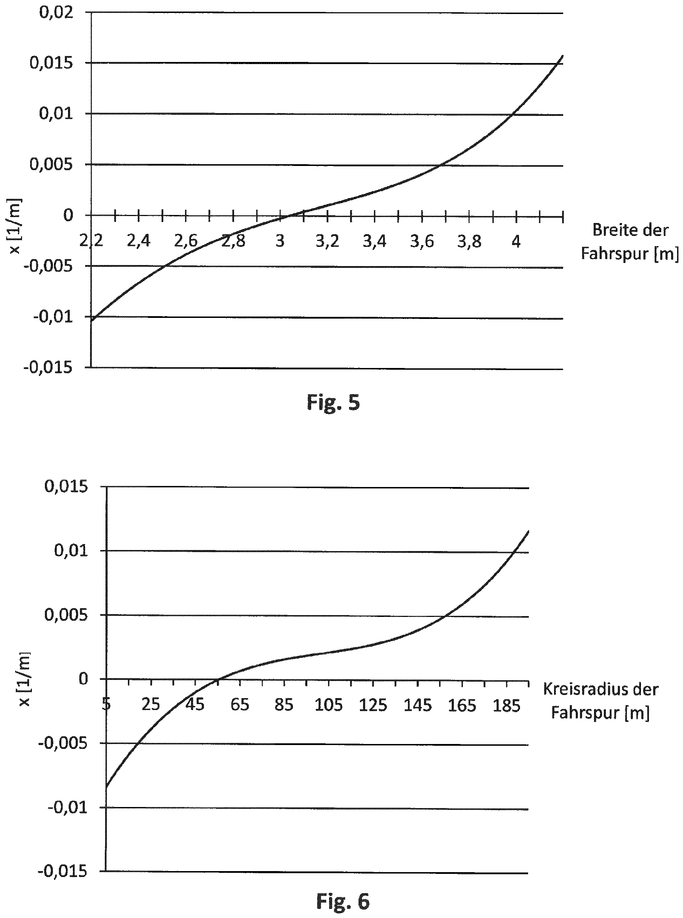

Anschließend werden die Ausgaben in je einen Bewertungswert x abgebildet. Für die Breite der Fahrspur verwendet die Vorrichtung 300 beispielsweise die in Figur 5 gezeigte Abbildungsvorschrift. Für den Kreisradius der Fahrspur verwendet die Vorrichtung 300 beispielsweise die in Figur 6 gezeigte Abbildungsvorschrift. Diese Vorschriften können durch die Auswertung von aufgezeichneten Fahrtdaten gewonnen werden und/oder in digitalen (Land)karten mit gespeichert werden.

Der Kehrwert der einzelnen Werte dieser Abbildungsvorschriften stellt jeweils den Grenzweg dar, den das Fahrzeug durchlaufen muss, um bei gleichbleibender Ausgabe die Maßzahl P von 100% (also 1) auf 0% (also 0) zu verringern oder von 0% auf 100% zu erhöhen, je nachdem, ob der Bewertungswert positiv oder negativ ist und bei Berechnung der Maßzahl nur basierend auf dieser einen Ausgabe, ohne die zweite Ausgabe. Beispielsweise wäre bei einer Ausgabe zur Fahrspurbreite von 3,7m der Grenzweg ungefähr 200m, bei einer Ausgabe zum Kreisradius der Fahrspur von 620m der Grenzweg ungefähr 200m.

Zur Berechnung der Maßzahl P wird die Maßzahl P anfänglich auf 0 gesetzt. Bei jeder neuen Berechnung der Maßzahl wird dann die Summe der mit dem jeweiligen Faktor gewichteten Bewertungszahlen zu der bisherigen Maßzahl hinzuaddiert.

$$P_j = \sum_{i=1}^{2} F(t_j) * x_i(t_j) + P_{alt}$$

Hier:

$$P_j = \sum_{i=1}^{2} v(t_j) * \Delta t * x_i(t_j) + P_{alt}$$

Wobei $t_j$ den Zeitpunkt des Empfangs der Ausgaben $x_i$ in der j-ten Wiederholung des Verfahrens bezeichnet, wobei es mindestens zwei Wiederholungen gibt.

Diese Berechnung wird zumindest für zwei verschiedene Zeitpunkte der Ausgaben der Vorrichtungen zur Umfelderkennung ausgeführt und anschließend wird die Maßzahl P bereitgestellt.

Ferner wird die Ausgabe R bereitgestellt, die anzeigt, ob die Maßzahl P zuletzt den Wert 0 oder 1 angenommen hat. R nimmt vorzugsweise die Werte -1 und +1 an. Ein Wert von -1 zeigt an, dass P zuletzt den Wert 0 angenommen hat, was als Erkennung interpretiert wird, dass die Fahrbahn nicht richtungsgebunden ist. Ein Wert von +1 zeigt an, dass P zuletzt den Wert von 1 angenommen hat, was als Erkennung einer Richtungsfahrbahn interpretiert wird.

Weiterhin kann mithilfe der Vorrichtung gemäß dem detaillierten Ausführungsbeispiel eine übergeordnete Aussage RFB bereitgestellt werden. Diese berechnet sich durch die Verknüpfung einer auf Landkarten-Daten basierenden Ausgabe (einer Vorrichtung zur Umfelderkennung) mit einer auf einer sonstigen Umfelderkennung basierenden Ausgabe (einer Vorrichtung zur Umfelderkennung). Grundidee hierbei ist, die schon aus Kartendaten bekannten Informationen durch sogenannte weiche Kriterien, z.B. aus Kameraaufnahmen gewonnene Erkenntnisse über das Umfeld, zu plausibilisieren.

Die Vorrichtung gemäß dem detaillierten Ausführungsbeispiel empfängt die Maßzahl Q (vorzugsweise mit Werten zwischen 0 und1), die die Ausgabe einer auf Landkarten-Daten basierenden Vorrichtung zur Umfelderkennung darstellt. Für diese Maßzahl Q wird die Ausgabe S bereitgestellt, die angibt, ob die Maßzahl Q zuletzt einen Minimal- oder Maximalwert erreicht hat. Die Ausgabe S nimmt die Werte +1 (Richtungsfahrbahn erkannt) und -1 (Erkennung, dass Fahrbahn nicht richtungsgebunden ist) an.

Die Berechnung der Gewichte geschieht dann wie folgt:

$$G1 = \frac{W1}{W1+W2} ; G2 = \frac{W2}{W1+W2}$$

Die Werte W1 und W2 lassen sich dabei wie folgt berechnen:

- W1 ist gleich der Maßzahl P, falls die Ausgabe R anzeigt, dass zuletzt der Maximalwert (1) der Maßzahl P erreicht wurde,
- W1 ist gleich dem Maximalwert von P minus der Maßzahl P, falls die Ausgabe R anzeigt, dass zuletzt der Minimalwert (0) der Maßzahl P erreicht wurde,
- W2 ist gleich der Maßzahl Q, falls die Ausgabe S anzeigt, dass zuletzt der Maximalwert (1) der Maßzahl Q erreicht wurde,
- W2 ist gleich dem Maximalwert (1) von Q minus der Maßzahl Q, falls die Ausgabe S anzeigt, dass zuletzt der Minimalwert (0) der Maßzahl Q erreicht wurde.

Die Summe der Gewichte ist offensichtlich stets 1. Je sicherer die Erkennung einer Richtungsfahrbahn ist, desto näher wird w1 oder w2 an dem Wert 1 sein und desto mehr relatives Gewicht wird der entsprechenden Erkennung beigemessen.

Schließlich wird der Wert für RFB berechnet und bereitgestellt:

$$RFB = G1 * R + G2 * S.$$

Nimmt RFB den Maximalwert (bspw. +1) an, wird die sicherste Erkennung einer Richtungsfahrbahn angezeigt, während der Minimalwert von RFB (bspw. -1) mit der größten Erkennungssicherheit anzeigt, dass es sich nicht um eine Richtungsfahrbahn handelt. Die Werte dazwischen stellen Erkennungsergebnisse mit geringerer Sicherheit bzw. Konfidenz dar.

## Patentansprüche

1. Verfahren zum Bereitstellen einer Einschätzung, ob eine Fahrbahn richtungsgebunden ist, wobei die Einschätzung durch eine Maßzahl angegeben wird, durch eine in einem Fahrzeug verbaute Vorrichtung, umfassend:

   Falls vor der Ausführung des Verfahrens noch keine Maßzahl bereitgestellt wurde, Festlegen einer Maßzahl (S401);
   Empfangen einer Ausgabe einer Vorrichtung zur Umfelderkennung (302) des Fahrzeugs, die auf einer Erkennung des Umfelds zu einem Zeitpunkt basiert (S402);
   Zuordnen eines Faktors zu der Ausgabe, wobei der Faktor auch auf der Geschwindigkeit des Fahrzeugs an einem der Ausgabe zugeordneten Zeitpunkt und einer Zeitspanne basiert (S403);
   Abbilden der Ausgabe in einen Bewertungswert gemäß einer vordefinierten Abbildungsvorschrift, durch welche berücksichtigt wird, inwiefern die durch die Ausgabe repräsentierte Eigenschaft des Umfelds auf eine Richtungsfahrbahn hindeutet (S404);
   Zuordnen des Faktors zu dem Bewertungswert (S405);

Berechnen der Maßzahl basierend auf einer Summe, die auf dem mit dem zugeordneten Faktor gewichteten Bewertungswert und der vorhergehend berechneten oder festgelegten Maßzahl basiert (S406); Bereitstellen der Maßzahl an Fahrerassistenzsysteme des Fahrzeugs (S407).

2. Verfahren nach Anspruch 1, weiterhin umfassend: Zumindest einmaliges Wiederholen der Schritte des Verfahrens nach Anspruch 1, wobei bei der Wiederholung von der Vorrichtung zur Umfelderkennung eine Ausgabe empfangen wird, die auf einer Erkennung des Umfelds zu einem anderen Zeitpunkt basiert.

3. Verfahren nach Anspruch 1 oder 2, weiter umfassend:

Bereitstellen des mit dem zugeordneten Faktor gewichteten Bewertungswerts; oder
Bereitstellen der Änderung der Maßzahl.

4. Verfahren nach einem der Ansprüche 1 bis 3, wobei der Faktor auf der in der Zeitspanne vom Fahrzeug durchlaufenen Strecke basiert.

5. Verfahren nach Anspruch 4 im Rückbezug auf Anspruch 2, wobei die Zeitspanne auf der Zeitspanne zwischen dem einen und dem anderen Zeitpunkt basiert.

6. Verfahren nach einem der Ansprüche 1 bis 5, wobei der Faktor auf der zurückgelegten Strecke des Fahrzeugs basiert, ferner umfassend:
Ausgeben einer Strecke, die vom Fahrzeug durchlaufen werden müsste bis die Maßzahl vom aktuellen Wert startend und bei wiederholter Berechnung gemäß den Schritten des Verfahrens nach Anspruch 1 einen Maximal- oder einen Minimalwert erreichen würde, wenn die Ausgaben der Vorrichtung zur Umfelderkennung gleich der letzten Ausgabe bleiben würden.

7. Verfahren nach einem der Ansprüche 1 bis 6, wobei der Faktor auf der zurückgelegten Strecke des Fahrzeugs basiert, und wobei der Kehrwert des Bewertungswerts bevorzugt die Grenzstrecke ist, die das Fahrzeug bei zur letzten Ausgabe gleichbleibenden Ausgaben und bei wiederholter Berechnung der Maßzahl gemäß den Schritten des Verfahrens nach Anspruch 1 durchlaufen müsste, um eine Änderung der Maßzahl um einen vorbestimmten Betrag zu erreichen, vorzugsweise um einen Maximalwert der Maßzahl.

8. Verfahren nach einem der Ansprüche 1 bis 7, wobei die Vorrichtung zur Umfelderkennung auf einer Videokamera, auf einem Radar, auf einem Lidar, auf einem Ultraschallsensor, auf einem Navigationssystem oder auf Kartendaten basiert.

9. Verfahren nach einem der Ansprüche 1 bis 8, weiter umfassend:
Festlegen der Maßzahl auf einen vordefinierten Wert, wenn eine vordefinierte Ausgabe der Vorrichtung zur Umfelderkennung oder einer anderen Vorrichtung zur Umfelderkennung empfangen wird, insbesondere wenn die Ausgabe empfangen wird, dass Gegenverkehr innerhalb der baulichen Trennung vorliegt oder dass ein Schild erkannt wurde, dass den Beginn oder das Ende einer Autobahn angibt.

10. Verfahren zum Bereitstellen einer Einschätzung, ob eine Fahrbahn richtungsgebunden ist, wobei die Einschätzung durch eine Maßzahl angegeben wird, durch eine in einem Fahrzeug verbaute Vorrichtung, umfassend:

Falls vor der Ausführung des Verfahrens noch keine Maßzahl berechnet wurde, Festlegen einer Maßzahl;
Empfangen einer Ausgabe einer ersten Vorrichtung zur Umfelderkennung des Fahrzeugs, die auf einer Erkennung des Umfelds zu einem ersten Zeitpunkt basiert;
Empfangen einer Ausgabe einer zweiten Vorrichtung zur Umfelderkennung des Fahrzeugs, die auf einer Erkennung des Umfelds zu einem zweiten Zeitpunkt basiert; wobei der erste Zeitpunkt und der zweite Zeitpunkt gleich sein können;
Zuordnen eines ersten Faktors zu der Ausgabe der ersten Vorrichtung zur Umfelderkennung, wobei der erste Faktor auch auf der Geschwindigkeit des Fahrzeugs an einem der Ausgabe der ersten Vorrichtung zur Umfelderkennung zugeordneten Zeitpunkt und einer Zeitspanne basiert;
Zuordnen eines zweiten Faktors zu der Ausgabe der zweiten Vorrichtung zur Umfelderkennung, wobei der zweite Faktor auch auf der Geschwindigkeit des Fahrzeugs an einem der Ausgabe der zweiten Vorrichtung zur Umfelderkennung zugeordneten Zeitpunkt und einer Zeitspanne basiert;

Abbilden der Ausgabe der ersten Vorrichtung zur Umfelderkennung in einen ersten Bewertungswert gemäß einer ersten vordefinierten Abbildungsvorschrift, durch welche berücksichtigt wird, inwiefern die durch die Ausgabe repräsentierte Eigenschaft des Umfelds auf eine Richtungsfahrbahn hindeutet;

Abbilden der Ausgabe der zweiten Vorrichtung zur Umfelderkennung in einen zweiten Bewertungswert gemäß einer zweiten vordefinierten Abbildungsvorschrift, durch welche berücksichtigt wird, inwiefern die durch die Ausgabe repräsentierte Eigenschaft des Umfelds auf eine Richtungsfahrbahn hindeutet;

Zuordnen des ersten Faktors zu dem ersten Bewertungswert;

Zuordnen des zweiten Faktors zu dem zweiten Bewertungswert;

Berechnen der Maßzahl basierend auf der Summe, die auf dem mit dem zugeordneten ersten Faktor gewichteten ersten Bewertungswert, dem mit dem zugeordneten zweiten Faktor gewichteten zweiten Bewertungswert und der vorhergehend berechneten oder festgelegten Maßzahl basiert;

Bereitstellen der Maßzahl an Fahrerassistenzsysteme des Fahrzeugs.

11. Verfahren nach Anspruch 10 weiter umfassend:

Zumindest einmaliges Wiederholen der Schritte des Verfahrens nach Anspruch 10, wobei bei der Wiederholung von der ersten und zweiten Vorrichtung zur Umfelderkennung je eine Ausgabe empfangen wird, die auf einer Erkennung des Umfelds zu einem jeweils anderen Zeitpunkt basiert.

12. Verfahren nach einem der Ansprüche 1 bis 11, weiter umfassend:

Begrenzen der Maßzahl auf einen Maximalwert, nach dessen Erreichen die Maßzahl nicht weiter erhöht wird;

Begrenzen der Maßzahl auf einen Minimalwert, nach dessen Erreichen die Maßzahl nicht weiter verringert wird.

13. Verfahren nach Anspruch 12, weiter umfassend:

Bereitstellen einer Ausgabe an die Fahrerassistenzsysteme, wobei die Ausgabe auf einen ersten Zustand gesetzt wird, wenn die Maßzahl den Maximalwert erreicht;

die Ausgabe auf einen zweiten Zustand gesetzt wird, wenn die Maßzahl den Minimalwert erreicht.

14. Verfahren nach einem der Ansprüche 1 bis 13, wobei die Maßzahl eine erste Maßzahl ist, weiter umfassend:

Empfangen einer zweiten Maßzahl, die auf der Grundlage einer Landkarte und der aktuellen Position des Fahrzeugs eine Einschätzung abgibt, ob eine Fahrbahn richtungsgebunden ist;

Abbilden der ersten Maßzahl in eine erste Ausgabe;

Bestimmen eines ersten Gewichts für die erste Ausgabe;

Abbilden der zweiten Maßzahl in eine zweite Ausgabe;

Bestimmen eines zweiten Gewichts für die zweite Ausgabe;

Berechnen einer dritten Maßzahl basierend auf der mit dem ersten Gewicht gewichteten ersten Ausgabe und der mit dem zweiten Gewicht gewichteten zweiten Ausgabe;

Bereitstellen der dritten Maßzahl an die Fahrerassistenzsysteme.

15. Verfahren nach Anspruch 14, wobei
das erste Gewicht auch auf der ersten Maßzahl basiert;
das zweite Gewicht auch auf der zweiten Maßzahl basiert.

16. Verfahren nach einem der Ansprüche 14 oder 15, wobei das Abbilden der ersten Maßzahl umfasst:

Setzen der ersten Ausgabe auf einen ersten Zustand, wenn die erste Maßzahl einen ersten Maximalwert erreicht;

Setzen der ersten Ausgabe auf einen zweiten Zustand, wenn die erste Maßzahl einen ersten Minimalwert erreicht,

wobei das Abbilden der zweiten Maßzahl umfasst:

Setzen der zweiten Ausgabe auf einen dritten Zustand, wenn die zweite Maßzahl zuletzt einen zweiten Maximalwert erreicht hat;

Setzen der zweiten Ausgabe auf einen vierten Zustand, wenn die zweite Maßzahl zuletzt einen zweiten Minimalwert erreicht hat,

wobei der erste und der dritte Zustand gleich sein können,

wobei der zweite und der vierte Zustand gleich sein können,

wobei der erste Maximalwert gleich dem zweiten Maximalwert sein kann,
wobei der erste Minimalwert gleich dem zweiten Minimalwert sein kann.

17. In einem Fahrzeug verbaute Vorrichtung, umfassend eine Recheneinheit, wobei die Vorrichtung dazu eingerichtet ist, die Ausgabe von einer Vorrichtung zur Umfelderkennung (302) oder die Ausgabe von mindestens zwei Vorrichtungen zur Umfelderkennung (302) und die Geschwindigkeit einer Vorrichtung zur Ermittlung der Geschwindigkeit (304) zu empfangen, und ferner zur Ausführung des Verfahrens nach einem der Ansprüche 1 bis 16 eingerichtet ist.

**Claims**

1. A method for providing an assessment of whether a roadway is directional, wherein the assessment is specified by a dimension, by an apparatus installed in a vehicle, the method comprising the steps of:

   stipulating a dimension if one has not yet been calculated prior to the execution of the method (S401);
   receiving an output from an apparatus for environment recognition (302) of the vehicle, which output is based on recognition of the environment at an instant (S402);
   associating a factor with the output, wherein the factor is also based on the speed of the vehicle at an instant associated with the output and on a period of time (S403);
   mapping the output into a rating value in accordance with a predefined mapping specification, by which the extent to which the property of the environment represented by the output indicates a directional roadway is taken into consideration (S404);
   associating the factor with the rating value (S405);
   calculating the dimension based on a sum that is based on the rating value weighted with the associated factor, and on the previously calculated or stipulated dimension (S406); and
   providing the dimension to driver assistance systems of the vehicle (S407).

2. A method according to claim 1, further comprising:
   repeating the steps of the method according to claim 1 at least once, wherein during the repetition an output is received from the apparatus for environment recognition and is based on a recognition of the environment at another instant.

3. A method according to claim 1 or 2, further comprising the following step:

   providing the rating value weighted with the associated factor; or
   providing the dimension change.

4. A method according to any one of claims 1 to 3, wherein the factor is based on the distance covered by the vehicle in the period of time.

5. A method according to claim 4 in dependency on claim 2, wherein the period of time is based on the period of time between said instant and said other instant.

6. A method according to any one of claims 1 to 5, wherein the factor is based on the distance covered by the vehicle, and wherein the method further comprises the following steps:
   outputting a distance that the vehicle would have to cover before the dimension would reach a maximum or minimum value starting from the current value and with repeated calculation according to the steps of the method according to claim 1 if the outputs from the apparatus for environment recognition were to remain consistent with the last output.

7. A method according to any one of claims 1 to 6, wherein the factor is based on the distance covered by the vehicle, and wherein the reciprocal of the rating value is preferably the limit distance that the vehicle would have to cover for outputs that are consistent with the last output and with repeated calculation of the dimension according to the steps of the method according to claim 1 in order to achieve a change in the dimension by a predetermined value, preferably a maximum value of the dimension.

8. A method according to any one of claims 1 to 7, wherein the apparatus for environment recognition is based on a video camera, on a radar, on a lidar, on an ultrasonic sensor, on a navigation system or on map data.

9. A method according to any one of claims 1 to 8, further comprising the following step:
stipulating the dimension as a predefined value if a predefined output from the apparatus for environment recognition or from another apparatus for environment recognition is received, more especially if the output received indicates that oncoming traffic is present within the physical partition or that a sign indicating the start or end of a motorway has been recognised.

10. A method for providing an assessment of whether a roadway is directional, wherein the assessment is defined by a dimension, by an apparatus installed in a vehicle, the method comprising the steps of:

stipulating a dimension if one has not yet been calculated prior to the execution of the method;
receiving an output from a first apparatus for environment recognition of the vehicle, which output is based on recognition of the environment at a first instant;
receiving an output from a second apparatus for environment recognition of the vehicle, which output is based on a second instant,
wherein the first instant and the second instant can be the same;
associating a first factor with the output from the first apparatus for environment recognition, wherein the first factor is also based on the speed of the vehicle at an instant associated with the output of the first apparatus for environment recognition and on a period of time,
associating a second factor from the output of the second apparatus for environment recognition, wherein the second factor is also based on the speed of the vehicle at an instant associated with the output of the second device for environment recognition and on a period of time;
mapping the output from the first apparatus for environment recognition into a first rating value in accordance with a first predefined mapping specification, by which the extent to which the property of the environment represented by the output indicates a directional roadway is taken into consideration;
mapping the output from the second apparatus for environment recognition into a second rating value in accordance with a second predefined mapping specification, by which the extent to which the property of the environment represented by the output indicates a directional roadway is taken into consideration;
associating the first factor with the first rating value;
associating the second factor with the second rating value;
calculating the dimension based on the sum that is based on the first rating value weighted with the associated first factor, on the second rating value weighted with the associated second factor, and on the previously calculated or stipulated dimension; and
providing the dimension to driver assistance systems of the vehicle.

11. A method according to claim 10, further comprising the following steps:
repeating the steps of the method according to claim 10 at least once, wherein during the repetition an output is received from each of the first and second apparatuses for environment recognition and is based on recognition of the environment in each case at another instant.

12. A method according to any one of claims 1 to 11, further comprising:

limiting the dimension to a maximum value, after which the dimension is not increased further; and
limiting the dimension to a minimum value, afterwhich the dimension is not decreased further.

13. A method according to claim 12, further comprising:

providing an output to the driver assistance systems, wherein the output is set to a first state when the dimension reaches the maximum value; and
the output is set to a second state when the dimension reaches the minimum value.

14. A method according to any one of claims 1 to 13, wherein the dimension is a first dimension, further comprising the following steps:

receiving a second dimension that outputs an assessment ofwhether a roadway is directional on the basis of a map and the current position of the vehicle;
mapping the first dimension into a first output;
determining a first weight for the first output;
mapping the second dimension into a second output;

determining a second weight for the second output;
calculating a third dimension on the basis of the first output weighted with the first weight and the second output weighted with the second weight; and
providing the third dimension to the driver assistance systems.

15. A method according to claim 14, wherein the first weight is also based on the first dimension; and the second weight is also based on the second dimension.

16. A method according to either one of clams 14 or 15, wherein the mapping of the first dimension comprises:

setting the first output to a first state when the first dimension reaches a first maximum value;
setting the first output to a second state when the first dimension reaches a first minimum value;
wherein the mapping of the second dimension comprises:

setting the second output to a third state when the second dimension has reached a second maximum value most recently;
setting the second output to a fourth state when the second dimension has reached a second minimum value most recently;
wherein the first and third states may be the same;
wherein the second and fourth states may be the same;
wherein the first maximum value may be the same as the second maximum value;
wherein the first minimum value may be the same as the second minimum value.

17. Apparatus, installed in a vehicle, comprising a computation unit, wherein the apparatus is configured to receive the output from an apparatus for environment recognition (302) or the output from at least two apparatuses for environment recognition (302) and the speed of an apparatus for determining the speed (304) and also is configured to carry out the method according to any one of claims 1 to 16.

**Revendications**

1. Procédé permettant d'évaluer si une chaussée est directionnelle cette évaluation étant fournie par un chiffre d'indice par un dispositif monté dans un véhicule, comportant les étapes suivantes consistant à :

lorsqu'avant la mise en oeuvre du procédé aucun chiffre d'indice n'a encore été fourni, définir un chiffre d'indice (S401),
recevoir une sortie d'un dispositif de reconnaissance de l'environnement (302) du véhicule qui est basée (S402) sur la reconnaissance du champ environnement à un instant,
associer un facteur à la sortie, ce facteur étant également basé sur la vitesse du véhicule à un instant associé à la sortie sur un intervalle de temps (S403),
représenter la sortie dans une valeur d'évaluation conformément à une règle de représentation prédéfinie selon laquelle on prend en considération dans quelle mesure la caractéristique de l'environnement représentée par la sortie indique une voie de circulation orientée (S404),
associer le facteur à la valeur d'évaluation (S405),
calculer le chiffre d'indice en se fondant sur une somme qui est basée sur la valeur d'évaluation pondérée par le facteur associé et le chiffre d'indice auparavant calculé ou déterminé (S406),
fournir le chiffre d'indice au système d'assistance du conducteur du véhicule (S407).

2. Procédé conforme à la revendication 1,
comprenant en outre une étape consistant à :
répéter au moins une fois les étapes du procédé conforme à la revendication 1, lors de la répétition le dispositif permettant de reconnaître l'environnement, recevant une sortie basée sur une reconnaissance de l'environnement à un autre instant.

3. Procédé conforme à la revendication 1 ou 2,
comprenant en outre des étapes consistant à :

fournir la valeur d'évaluation pondérée par le facteur associé, ou

fournir la modification du chiffre d'indice.

4. Procédé conforme à l'une des revendications 1 à 3,
selon lequel le facteur est basé sur le trajet parcouru par le véhicule dans l'intervalle de temps.

5. Procédé conforme à la revendication 4 rattachée à la revendication 2, selon lequel l'intervalle de temps est basé sur l'intervalle de temps entre l'instant et l'autre instant.

6. Procédé conforme à l'une des revendications 1 à 5,
selon lequel le facteur est basé sur le trajet parcouru par le véhicule comprenant en outre une étape consistant à : délivrer en sortie le trajet qui devrait être parcouru par le véhicule jusqu'à ce que le chiffre d'indice atteigne en partant de la valeur actuelle et lors d'un calcul répété conformément aux étapes du procédé conforme à la revendication 1, une valeur maximum ou une valeur minimum lorsque les sorties du dispositif de reconnaissance de l'environnement sont restées les mêmes que la dernière sortie.

7. Procédé conforme à l'une des revendications 1 à 6,
selon lequel le facteur est basé sur le trajet parcouru par le véhicule, et la valeur inverse de la valeur d'évaluation est de préférence le trajet limite que le véhicule devrait parcourir pour des sorties restant similaires à la dernière sortie et lors d'une répétition du calcul du chiffre d'indice conformément aux étapes du procédé conforme à la revendication 1 pour obtenir une modification du chiffre d'indice d'une valeur prédéfinie, de préférence une valeur maximum du chiffre d'indice.

8. Procédé conforme à l'une des revendications 1 à 7,
selon lequel le dispositif permettant de reconnaître l'environnement est basé sur une vidéo caméra, sur un radar, sur un lidar, sur un capteur à ultrasons, sur un système de navigation ou sur des données cartographiques.

9. Procédé conforme à l'une des revendications 1 à 8,
comprenant en outre une étape consistant à :
fixer le chiffre d'indice à une valeur prédéfinie lorsqu'une sortie prédéfinie du dispositif permettant de reconnaître l'environnement ou d'un autre dispositif permettant de reconnaître l'environnement est reçue, en particulier lorsqu'une sortie est reçue selon laquelle il y a un trafic en sens inverse dans une séparation construite, ou qu'un panneau qui indique le début ou la fin d'une autoroute a été reconnu.

10. Procédé permettant d'évaluer si une chaussée est directionnelle, cette évaluation étant fournie par un chiffre d'indice par un dispositif monté dans un véhicule, comprenant les étapes suivantes consistant à :

lorsque, avant la mise oeuvre du procédé aucun chiffre d'indice n'a encore été calculé, définir un chiffre d'indice, recevoir une sortie d'un premier dispositif permettant de reconnaître l'environnement du véhicule qui est basée sur la reconnaissance de l'environnement à un premier instant,
recevoir une sortie d'un second dispositif permettant de reconnaître l'environnement du véhicule, qui est basée sur une reconnaissance de l'environnement à un second instant, le premier instant et le second instants pouvant être les mêmes,
associer un premier facteur à la sortie du premier dispositif permettant de reconnaître l'environnement, le premier facteur étant également basé sur la vitesse du véhicule à un instant associé à la sortie du premier dispositif permettant de reconnaître l'environnement et sur un intervalle de temps,
associer un second facteur à la sortie du second dispositif permettant de reconnaître l'environnement, le second facteur étant également basé sur la vitesse du véhicule à un instant associé à la sortie du second dispositif permettant de reconnaître l'environnement et sur un intervalle de temps,
représenter la sortie du premier dispositif permettant de reconnaître l'environnement dans une première valeur d'évaluation conformément à une première règle de représentation prédéfinie selon laquelle on prend en considération dans quelle mesure la caractéristique de l'environnement représentée par la sortie indique une voie de circulation orientée,
représenter la sortie du second dispositif permettant de reconnaître l'environnement dans une seconde valeur d'évaluation conformément à une seconde règle de représentation prédéfinie selon laquelle on prend en considération dans quelle mesure la caractéristique de l'environnement représentée par la sortie indique une voie de circulation orientée,
associer le premier facteur à la première valeur d'évaluation,
associer le second facteur à la seconde valeur d'évaluation,

calculer le chiffre d'indice en se fondant sur une somme qui est basée sur la première valeur d'évaluation pondérée par le premier facteur associé, la seconde valeur d'évaluation pondérée par le second facteur associé et le chiffre d'indice auparavant calculé ou déterminé, et

fournir le chiffre d'indice au système d'assistance du conducteur du véhicule.

11. Procédé conforme à la revendication 10 comprenant une étape consistant à :

répéter au moins une fois les étapes du procédé conforme à la revendication 10, lors de la répétition, le premier et le second dispositifs permettant de reconnaître l'environnement recevant respectivement une sortie basée sur une reconnaissance de l'environnement à un autre instant respectif.

12. Procédé conforme à l'une des revendications 1 à 11,
comprenant en outre des étapes consistant à :

- limiter le chiffre d'indice à une valeur maximum, après l'atteinte de laquelle le chiffre d'indice n'est plus augmenté,
- limiter le chiffre d'indice à une valeur minimum après l'atteinte de laquelle le chiffre d'indice n'est plus diminué.

13. Procédé conforme à la revendication 12,
comprenant en outre une étape consistant à :
fournir une sortie au système d'assistance du conducteur, la sortie étant réglée sur un premier état lorsque le chiffre d'indice atteint la valeur maximum et la sortie étant réglée sur un second état lorsque le chiffre d'indice atteint la valeur minimum.

14. Procédé conforme à l'une des revendications 1 à 13,
selon lequel le chiffre d'indice est un premier chiffre d'indice, comprenant en outre des étapes consistant à :

recevoir un second chiffre d'indice qui permet, sur le fondement d'une carte routière et de la position actuelle du véhicule d'évaluer si la voie de circulation est unidirectionnelle,
représenter le premier le chiffre d'indice dans une première sortie,
déterminer un premier poids pour la première sortie,
représenter la seconde valeur de mesure dans une seconde sortie,
déterminer un second poids pour la seconde sortie,
calculer un troisième chiffre d'indice en se basant sur la première sortie pondérée avec le premier poids et sur la seconde sortie pondérée avec le second poids,
fournir le troisième chiffre d'indice au système d'assistance du conducteur.

15. Procédé conforme à la revendication 14,
selon lequel le premier poids est également basé sur le premier chiffre d'indice, et
le second poids est également basé sur le second chiffre d'indice.

16. Procédé conforme à l'une des revendications 14 et 15,
selon lequel la représentation du premier chiffre d'indice comprend des étapes consistant à :

régler la première sortie sur un premier état lorsque le premier chiffre d'indice atteint une première valeur maximum,
régler la première sortie sur un second état lorsque le premier chiffre d'indice atteint une première valeur minimum,
la représentation du second chiffre d'indice comprend des étapes consistant à :

régler la seconde sortie sur un troisième état lorsque le second chiffre d'indice a, en dernier lieu, atteint une seconde valeur maximum,
régler la seconde sortie sur un quatrième état lorsque le second chiffre d'indice a, en dernier lieu, atteint une seconde valeur minimum,
le premier état et le troisième état pouvant être similaires,
le second état et le quatrième état pouvant être similaires,
la première valeur maximum pouvant être égale à la seconde valeur maximum,
la première valeur minimum pouvant être égale à la seconde valeur minimum.

17. Dispositif monté dans un véhicule comprenant une unité de calcul, ce dispositif étant réalisé pour recevoir la sortie d'un dispositif permettant de reconnaître l'environnement (302) ou la sortie d'au moins deux dispositifs permettant de reconnaître l'environnement (302) et la vitesse d'un dispositif permettant de déterminer la vitesse (304), et en outre pour permettre la mise en oeuvre d'un procédé conforme à l'une des revendications 1 à 16.

entgegenkommende Richtungsfahrbahn

Eigene Richtungsfahrbahn

**Fig. 1**

**Fig. 2**

EP 2 856 452 B1

Fig. 3

18

**400**

S401 ── Festlegen einer Maßzahl P

S402 ── Empfangen einer Ausgabe einer Vorrichtung zur Umfelderkennung eines Fahrzeugs, die auf einer Erkennung des Umfelds zu einem ersten Zeitpunkt basiert

S403 ── Zuordnen eines Faktors zu der Ausgabe, wobei der Faktor auch auf der Geschwindigkeit des Fahrzeugs zu dem für die Ausgabe relevanten Zeitpunkt basiert

S404 ── Abbilden der Ausgabe in einen Bewertungswert gemäß einer vordefinierten Abbildungsvorschrift

S405 ── Zuordnen des Faktors zu dem Bewertungswert

S406 ── Berechnen der Maßzahl basierend auf einer Summe, die auf dem mit dem zugeordneten Faktor gewichteten Bewertungswert und der vorhergehend berechneten oder festgelegten Maßzahl basiert;

S407 ── Bereitstellen der Maßzahl

**Fig. 4**

Fig. 5

Fig. 6

20

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10042980 A1
- DE 102005007802 A1
- DE 102007048842 A1